# EUROPEAN PATENT APPLICATION

(11) **EP 2 080 439 A1**
(43) Date of publication of application: **22.07.2009**
(21) Application number: 09150492.8
(22) Date of filing: 14.01.2009
(51) Int. Cl.: A24C 5/34, G01N 21/952

(54) **A unit for scanning tobacco products of elongated shape optically**

(30) Priority: 21.01.2008 IT BO20080031
(71) Applicant: G.D. S.p.A, 40133 Bologna (IT)
(72) Inventor: Osti, Eugenio, 40069, ZOLA PREDOSA (BO) (IT); Bertoldi, Stefano, 40012, CALDERARA DI RENO (Bologna) (IT); Campo, Paolo, 40133, BOLOGNA (IT); Zanetti, Umberto, 41100, MODENA (IT)
(74) Representative: Ghioni, Carlo Raoul Maria

(57) **Abstract**

An optical scanning unit (1) for testing the visual integrity of cigarettes (3) is equipped with a linear CCD array camera (12) by which a cigarette (3) can be imaged along a scanning zone (6), also a system for illuminating the scanning zone (6), and a cleaning device (15) positioned between the camera (12) and the scanning zone (6), serving to keep the scanning zone (6) free of impurities; the cleaning device (15) in turn incorporates a chamber (16) attached to the housing of the camera (12) and presenting a linear slit (17) directed toward and aligned on the scanning zone (6). The linear slit (17) provides an outlet through which a stream of air (22), produced by a pneumatic generator (21) connected to an inlet side of the chamber (16), is released continuously and in such a manner as to sweep the outer surface of the scanned cigarette (3).

## Description

The present invention relates to a unit for scanning tobacco products of elongated shape optically.

More particularly, the invention finds application in tobacco manufacturing machinery such as cigarette or filter makers.

Reference is made explicitly to cigarette makers in the course of the following specification, albeit with no limitation in scope implied.

It is the usual practice to carry out a visual check on the external integrity of single cigarettes passing through the filter tip attachment section of a cigarette maker, to ensure that there are no lacerations, flaws or stains on the outer surface of the cigarette paper, or on the tipping paper.

This visual check is accomplished by causing the cigarettes to advance in succession, conveyed on a revolving drum and ordered with their longitudinal axes disposed transversely to the feed direction, following a predetermined path along which each one is inspected as it passes in front of an optical quality control device located downstream of a cigarette making unit.

The quality control device in question scans the outer surface of the cigarettes by sampling straight line generators of the surface, then, having read the images of these same sample generators and compared each scanned image with a model or reference image, identifying and indicating any superficial defects of manufacture that may be present, and consequently determining whether or not the cigarette is of acceptable quality.

The quality control device consists generally in a linear camera utilizing a CCD array, familiar to persons skilled in the art as a Line Scan Camera, which is able to read the surface of an object as a series of single scan lines.

The scan line of the camera falls on a sample generator of the outer surface presented by the cigarette as it passes through a scanning zone at a given moment.

It is the usual practice to scan a plurality of sample generators per single cigarette, utilizing two or more cameras arranged along the quality control path and/or causing the cigarette to rotate on its longitudinal axis in such a way that various generators are presented at the scanning area.

The visual inspection method outlined above betrays the drawback that, in the event of airborne foreign matter (specks of dust, tobacco filler, particulates, etc...) occupying the space between the cigarette and the optical scanning device during operation, this will be interpreted spuriously by the device as a flaw and may trigger the rejection of a cigarette, even though in reality the cigarette is not defective.

In other words, it is not possible to know *a priori* whether an error signal generated by the optical scanning device effectively indicates a defect in the cigarette, or has been triggered by an artifact on the scan line.

The drawback in question is highlighted especially in dust-laden surroundings such as those in which a cigarette maker will typically operate.

In this context, the object of the present invention is to provide a unit for scanning tobacco products of elongated shape optically, such as will be unaffected by the drawback mentioned above.

In particular, the object of the present invention is to provide a unit for scanning tobacco products of elongated shape optically, designed in such a way that airborne particles will not occupy the line of sight between the camera and the scanned product.

A further object of the present invention is to provide a unit for scanning tobacco products of elongated shape optically, while guaranteeing total confidence in the correct interpretation of error signals generated by the selfsame unit.

The stated objects are substantially realized in a unit according to the present invention for scanning tobacco products of elongated shape optically, of which the characteristics are as recited in one or more of the appended claims.

The invention will now be described in detail, by way of example, with the aid of the accompanying drawings, in which:
- figure 1 is a schematic illustration of a cigarette maker comprising two units for scanning cigarettes optically, according to the present invention;
- figure 2 is a perspective view of the unit for scanning cigarettes optically, embodied in accordance with the present invention;
- figure 3 is a lateral section view of the unit illustrated in figure 2;
- figure 4 is a perspective view of the unit for scanning cigarettes optically, embodied in accordance with the invention, illustrated a first alternative embodiment;
- figure 5 is a lateral section view of the optical scanning unit illustrated in figure 4;

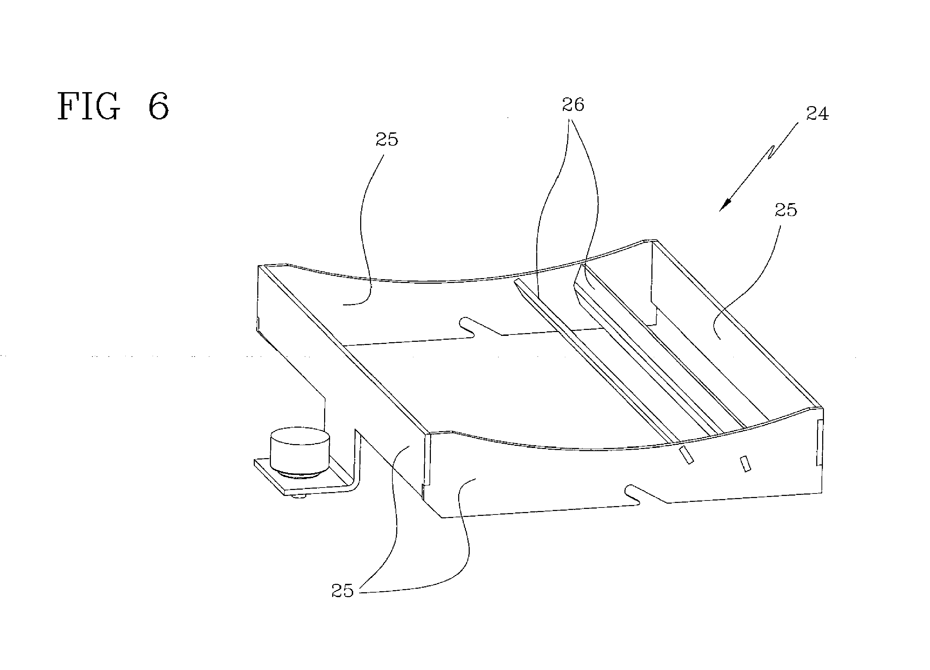

- figure 6 shows a component of the unit illustrated in figure 4 ;
- figure 7 shows the unit for scanning cigarettes optically, according to the present invention, illustrated in a view from above with certain parts omitted better to reveal others;
- figure 8 shows a second alternative embodiment of the unit as in figure 1 for scanning cigarettes optically, illustrated in a view from above;

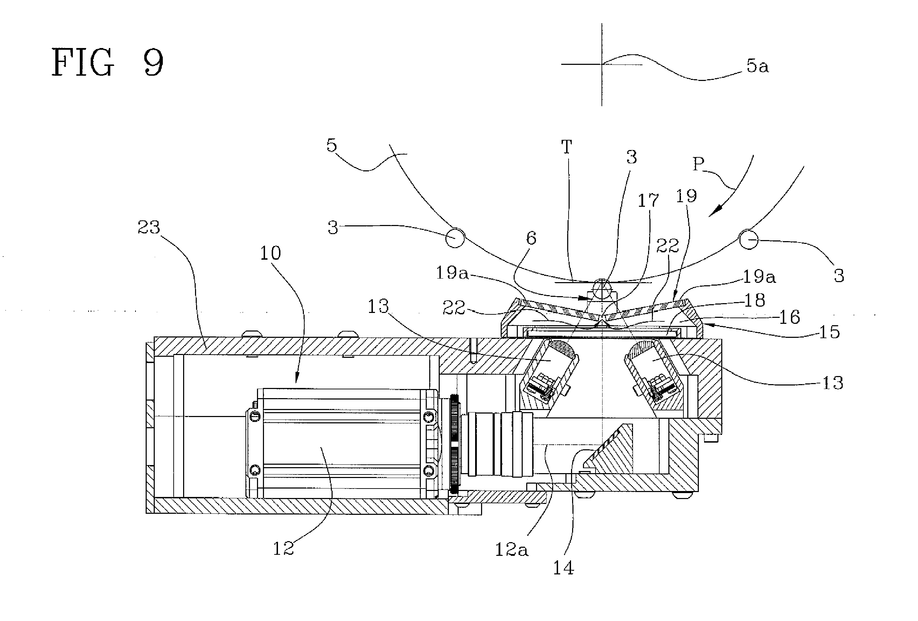

- figure 9 shows a third alternative embodiment of the unit for scanning cigarettes optically, according to the present invention.

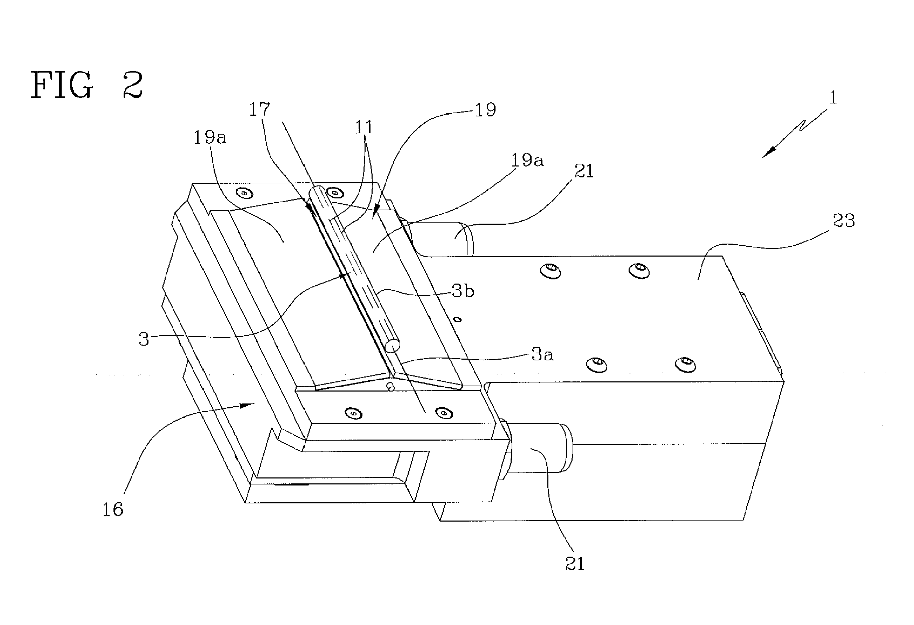

With reference to figure 2, numeral 1 denotes a unit, in its entirety, for scanning tobacco products of elongated shape optically in accordance with the present invention.

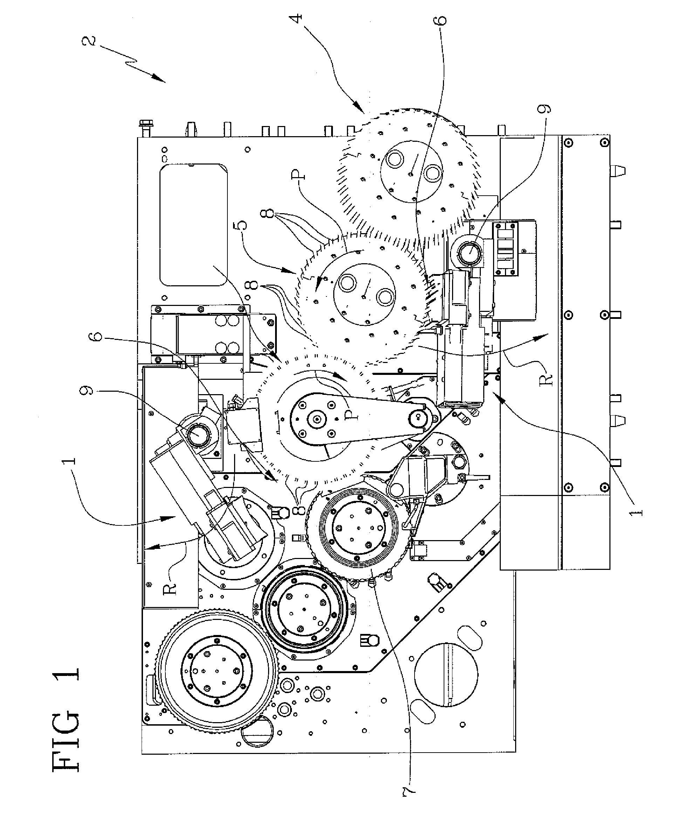

The unit 1 finds application to advantage in cigarette makers, and more particularly in a filter tip attachment machine of the type shown in figure 1, denoted 2 in its entirety.

Referring to figure 1, the filter tip attachment machine 2 comprises a plurality of drums, conventional in embodiment, by which the cigarettes 3 are advanced along a predetermined inspection path.

The cigarettes 3 are directed in succession by an infeed drum 4 onto an inspection drum 5, which causes each one to pass through an inspection or scanning zone 6 before releasing it to an outfeed drum 7, whereupon the scanned cigarettes 3 are distanced from the machine 2 by the latter drum 7. An alternative embodiment of the machine might use at least two inspection drums 5, placed in sequence.

The inspection drum 5 is furnished peripherally with a plurality of aspirating flutes 8, each one of which designed to accommodate and retain a respective cigarette 3.

The inspection drum 5 rotates in such a way as to advance the flutes 8 in a feed direction denoted P and along an inspection path, following a circular trajectory, of which one part coincides with the scanning zone 6.

The inspection drum 5 further comprises means of familiar type (not illustrated) such as will engage the two ends of each cigarette 3 occupying a relative flute 8, and cause the selfsame cigarette 3 to rotate about its longitudinal axis 3a.

Accordingly, each cigarette 3 can be made to describe a movement composed of translatory motion along the feed direction P, at right angles to the direction along which the axis 3a of the single cigarette 3 is oriented, and rotary motion about its own longitudinal axis 3a.

The unit 1 to which the present invention relates is associated with each inspection drum 5, and in particular, mounted pivotably with respect to an axis of rotation denoted 9 in such a way as to alternate between an operating position, in which the unit 1 is offered directly to the inspection drum 5 at a point coinciding with the scanning zone 6, and a non-operating position rotated away from the filter tip attachment machine 2, distanced from the inspection drum 5, in which it can undergo normal servicing operations such as cleaning, or the replacement of damaged or worn parts.

The unit 1 comprises detection means 10 of optical type designed to perform linear scans on each cigarette 3, along a scanning zone 6 that coincides with at least one straight line generator of the outer surface 3b presented by each cigarette. In other words, the detection means 10 are able to perform a plurality of optical scans, or readings, on respective scan lines 11 extending along the outer surface 3b of the cigarette, in a direction parallel to the longitudinal axes 3a of the cigarettes 3.

In a preferred embodiment, the detection means 10 will take the form of a multi-line CCD array type camera 12 with the capacity to generate a band consisting in a plurality of parallel scan lines 11 coinciding with the generators of the cigarette 3, emitted in pulsed mode one after another. The width of the single scan line will be of the order of a few micrometres.

The camera is mounted preferably inside a totally enclosed housing 23 such as will afford protection from external objects and maintain the integrity and functional efficiency of the device in a dust-laden environment containing airborne particles.

The unit further comprises timing means of familiar type (not illustrated), by which the movement of the cigarettes 3 is controlled so as to ensure positional synchronization on their passage through the scanning zone 6.

The optical quality control unit 1 also comprises lighting means 13 serving to illuminate the scanning zone 6 or target area.

In a preferred embodiment, such means 13 comprise one or more rows of light emitting diodes, adjustable for position so that the parallel scan lines 11 can be illuminated to best advantage.

The camera 12 is preferably not trained directly on the cigarette 3 and the scanning zone 6; rather, the unit 1 is configured with the longitudinal axis 12a of the camera 12 inclined relative to a plane T lying tangential to the inspection drum 5 at the scanning zone 6. In the preferred solution illustrated, the axis 12a of the camera 12 extends parallel to the tangential plane T aforementioned.

Accordingly, to capture the image from the scanning zone 6, a reflecting surface 14 is required, such as will mirror the image of the cigarette 3 and redirect it toward the camera 12.

The unit 1 according to the invention also comprises a device 15 designed to keep the scanning zone 6 free of impurities.

The device 15 in question, located between the detection means 10 and the scanning zone 6, comprises a chamber 16 presenting a linear slit 17. To advantage, the linear slit 17 is aligned with the scanning zone 6.

In particular, the chamber 16 is positioned between the reflecting surface 14 and the scanning zone 6, also between the lighting means 13 and the scanning zone. The chamber 16 presents a flat and transparent bottom wall 18 through which the image can be captured, and a top wall 19, likewise transparent, affording the linear slit 17 aforementioned.

The linear slit 17 is aligned with the scanning zone 6, that is to say, aligned on a generator 11 of the cigarette 3 being inspected at any given moment.

Also associated with the chamber 16 are pneumatic means 21, serving to generate at least one stream of air 22 internally of the chamber. In this situation, air escapes through the linear slit 17 and impacts gently on the outer surface 3b of the inspected cigarette 3, in such a way as to keep the scanning zone 6 clean and free of impurities.

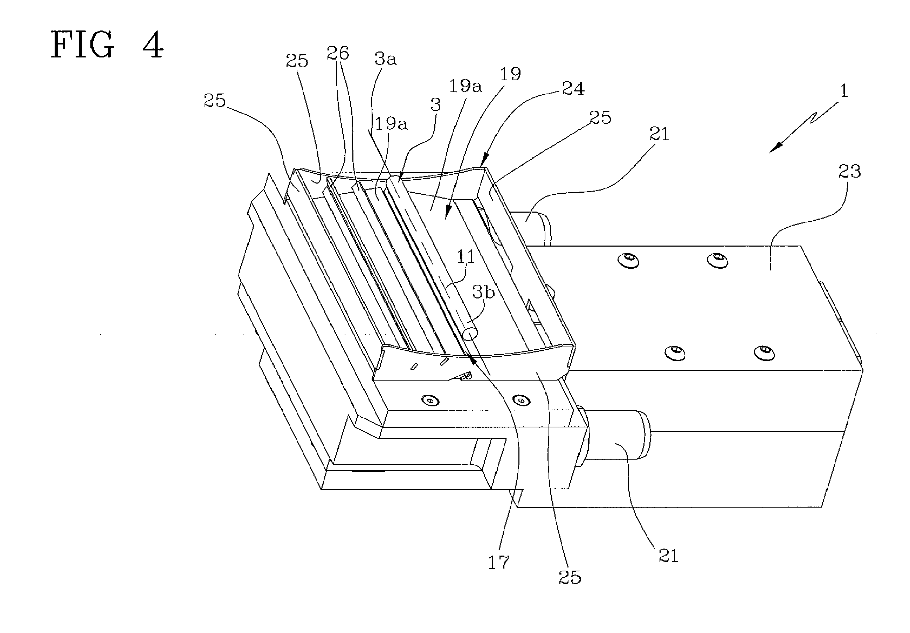

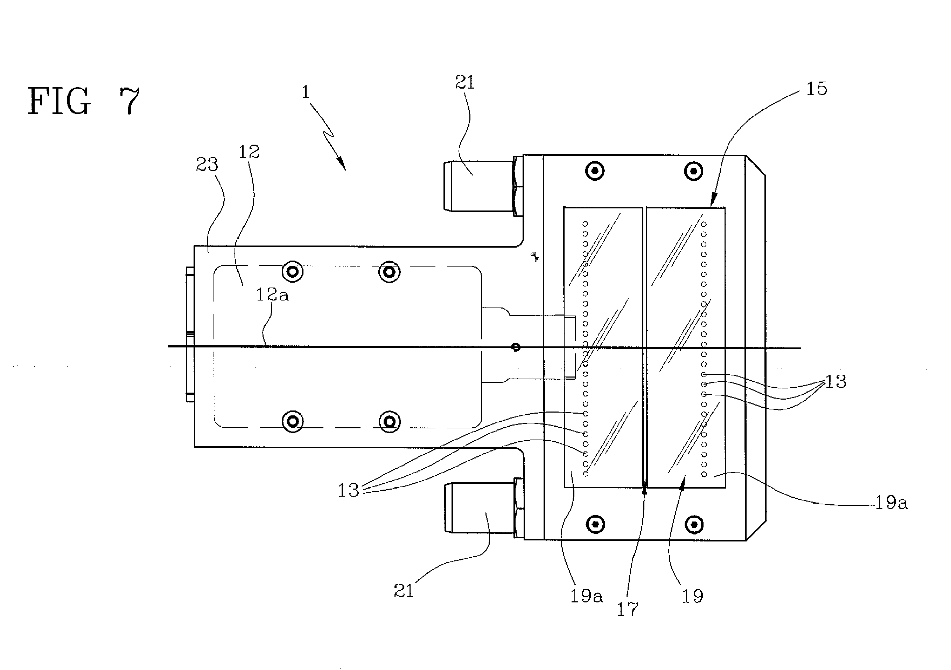

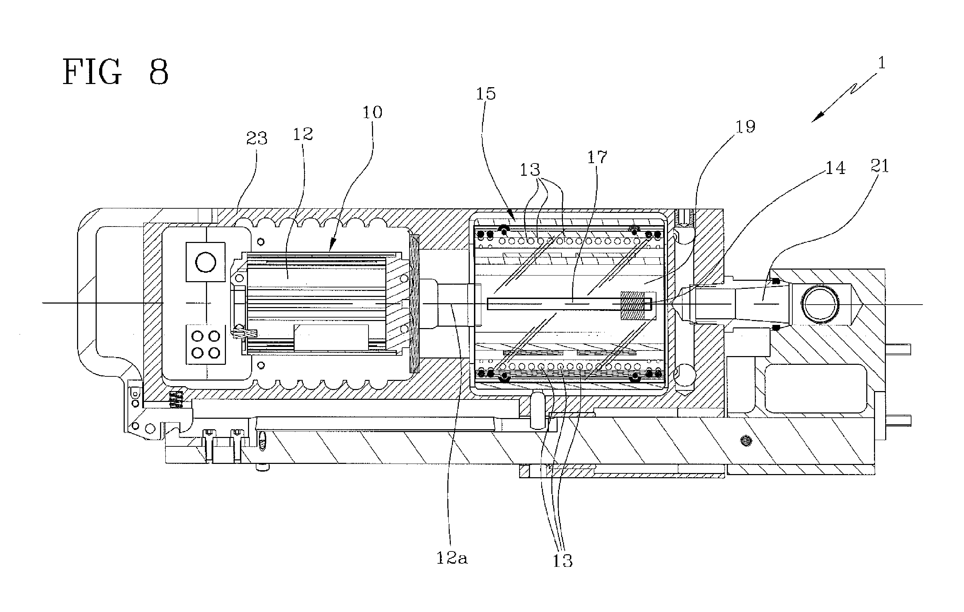

The pneumatic means 21 comprise one or more nozzles positioned internally of the chamber 16, so as to produce an airstream 22 preferably in a direction orthogonal to the longitudinal dimension of the linear slit 17. Depending on the available space in which to accommodate the optical scanning unit 1, the pneumatic means 21 will extend either externally of the chamber 16 alongside the camera housing 23, as illustrated in figure 2 or 4 or 7, or on the side of the chamber opposite from the camera as illustrated in figure 8.

The top wall 19 of the chamber 16 comprises preferably two panels 19a located side by side, mutually opposed and spaced apart in such a way as to create the linear slit 17.

Alternatively, the top wall 19 might consist of an appropriately shaped single panel, fashioned so as to present a linear slit 17 located in a central position.

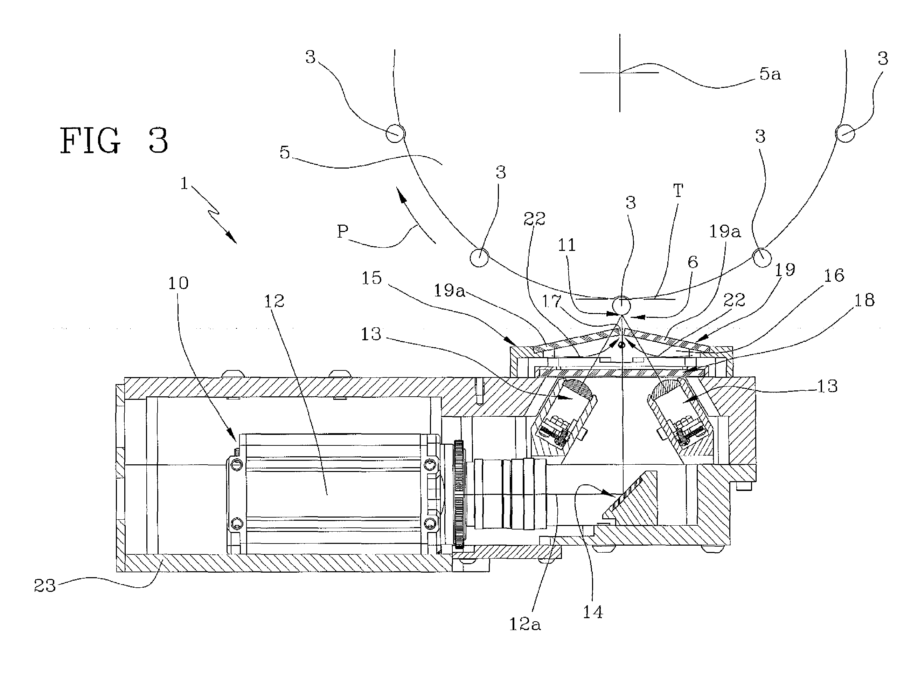

In either case, the top wall 19 will present a preferably convex face outermost, as illustrated in figure 3.

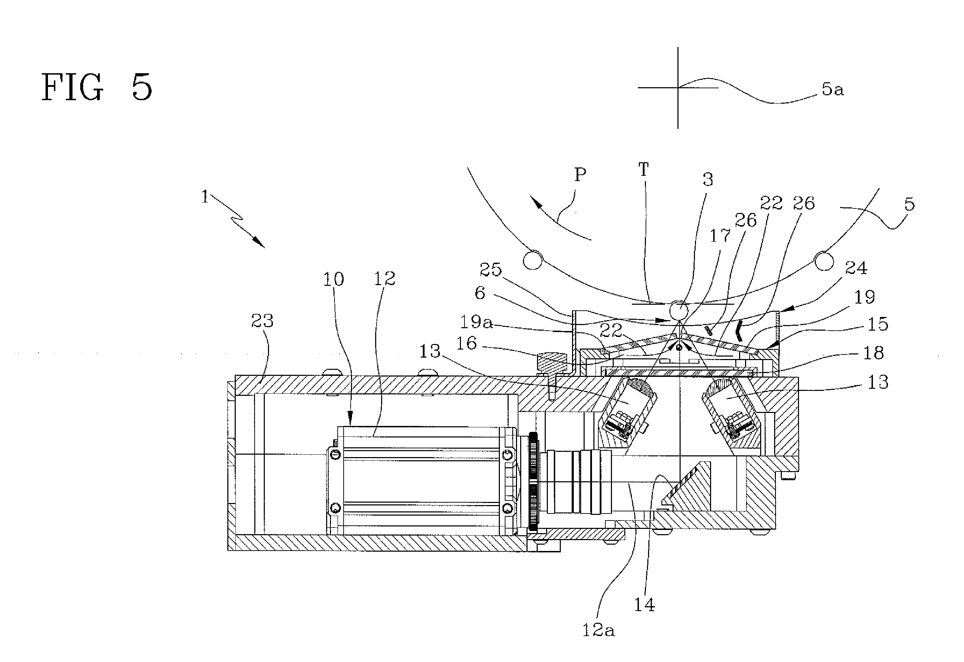

In other possible configurations, the top wall 19 might present a concave outer face, as illustrated in figure 5, or might also appear flat.

In a preferred embodiment, the top wall 19 will be inclined relative to the bottom wall 18 at an angle of between 5° and 15°, and ideally 10°, whether in the concave or in the convex configuration.

The airstream 22 delivered by the nozzles of the pneumatic means 21 is played across the inside face of the top wall 19 and guided consequently toward the linear slit 17. More exactly, the airstream 22 is established in the chamber 16 at a pressure marginally higher than the pressure registering normally within the enclosure, and therefore expelled from the linear slit 17 with a slight degree of force, in the manner of an air knife, sweeping the entire scanning zone 6 and clearing any airborne particles or foreign matter that may be present on the scan line, interposed between the inspected cigarette and the reflecting surface 14.

The cigarettes 3 are conveyed by the inspection drum 5 into a position of alignment with the scanning zone 6.

When the inspection drum 5 is in motion, turning on its axis 5a of rotation, it entrains a flow of air that will invest the scanning zone 6 and collide with the airstream 22, or air knife, emerging from the linear slit 17.

The flow of air entrained by the drum could give rise to turbulence, and this in turn could result in particles being transported accidentally toward the scanning zone 6.

To avoid this drawback, accordingly, the unit 1 might also comprise a deflector 24 serving to intercept the flow of air entrained by the drum 5 and divert it away from the scanning zone 6.

In other words, the deflector functions simply as a protective shield fitted over the chamber 16, extending externally of and above the top wall 19. The deflector 24 comprises four side walls 25 by which the entire scanning zone 6 is protected, and at least one or preferably two deflecting vanes 26 positioned longitudinally along a direction parallel to the axis 5a of the inspection drum 5, that is to say orthogonal to the direction of rotation of the drum 5.

The flow of air entrained by the rotating drum is intercepted by the vanes 26 and directed away from the scanning zone 6.

To advantage, the side walls 25 of the deflector 24 are contoured uppermost to ensure a close match with the circular profile of the inspection drum 5 when the unit assumes the operating position.

To reiterate, the unit 1 is pivotable about a relative axis 9 of rotation in such a way that it can alternate, moving through an arc denoted R, between an operating position in which the chamber 16 is offered directly to the inspection drum 5 and the linear slit 17 lies parallel with and opposite the cigarette 3 being scanned, and a non-operating position rotated away from the filter tip attachment machine 2, distanced from the inspection drum 5 with which the unit 1 is associated, in such a way that servicing operations can be performed on the selfsame unit 1.

In particular, the chamber 16 will be completely removable, thereby allowing access to the inside and exposing the top wall 19 for cleaning purposes.

In effect, the top wall 19 can be rendered opaque by deposits of dust, which will reduce the intensity of the light falling on the scanning zone 6.

The objects stated at the outset are achieved by the present invention.

With a unit for scanning cigarettes optically as described and illustrated, an inspection area, and in particular a scanning zone, can be kept perfectly clean and free of any impurities that otherwise might occupy the space between the scanning zone and the inspected object and consequently induce a quality control error leading to the rejection of cigarettes which, in reality, are not damaged.

The presence of an airstream emerging steadily from the chamber also prevents the accidental ingress of tobacco particles into the selfsame chamber.

With the chamber being completely removable, all parts of the unit can be serviced and cleaned to optimum advantage.

In addition, the deflector isolates the scanning zone fluodynamically, thereby disallowing any collision between the air knife issuing from the chamber and the flow of air entrained by the drum, which could result in accidental and problematic turbulence.

## Claims

1. A unit for scanning tobacco products of elongated shape optically, comprising optical detection means (10) designed to perform linear scans on the outer surface (3b) of the products (3) along a scanning zone (6), and lighting means (13) by which the scanning zone (6) is illuminated,
**characterized**
**in that** it comprises a cleaning device (15) positioned between the detection means (10) and the scanning zone (6), such as will keep the scanning zone (6) free of impurities.

2. A unit as in claim 1, wherein the cleaning device (15) comprises a chamber (16) presenting a linear slit (17) aligned on the scanning zone (6).

3. A unit as in claim 2, wherein the chamber (16) is delimited by a bottom wall (18) and a top wall (19), both of which transparent, and the linear slit (17) is located in the top wall (19).

4. A unit as in claim 2 or 3, wherein the top wall (19) of the chamber (16) is composed of two mutually opposed panels (19a), and the linear slit (17) is located between the two panels (19a).

5. A unit as in claim 3 or 4, wherein the top wall (19) is flat.

6. A unit as in claim 3 or 4, wherein the top wall (19) of the chamber (16) presents an externally concave profile.

7. A unit as in claim 3 or 4, wherein the top wall (19) presents an externally convex profile.

8. A unit as in claim 6 or 7, wherein the panels (19a) are inclined relative to the bottom wall (18) of the chamber at an angle of between 5° and 15°, preferably 10°.

9. A unit as in claims 2 to 8, wherein the cleaning device (15) comprises pneumatic means (21) by which at least one stream of air (22) is directed into the chamber (16).

10. A unit as in claim 9, wherein the airstream (22) generated by the pneumatic means (21) escapes from the chamber (16) by way of the linear slit (17).

11. A unit as in claim 9 or 10, wherein the pneumatic means (21) are located internally of the chamber (16) and in such a way as to generate the airstream (22) in a direction orthogonal to the linear slit (17).

12. A unit as in preceding claims, wherein the lighting means (13) comprise a plurality of light emitting diodes arranged in at least two rows.

13. A unit as in preceding claims, wherein the optical detection means (10) comprise a linear CCD array camera (12).

14. A unit as in claim 13, wherein the linear camera (12) not trained directly on the products (3), and the unit (1) comprises a reflecting surface (14) by which the image of the product (3) captured through the linear slit (17) is mirrored and redirected toward the linear camera (12).

15. A unit as in preceding claims, comprising a deflector (24) serving to divert a flow of air entrained by a revolving inspection drum (5) on which the scanned product (3) is conveyed.

16. A unit as in claims 2 and 15, wherein the deflector (24) is mounted above the chamber (16) and contoured so as to match the profile of the inspection drum (5).

17. A unit as in claim 16, wherein the deflector (24) presents at least one vane (26) positioned so that the air entrained by the drum (5) will be intercepted and diverted downwards in such a way as to protect the scanning zone (6).

18. A unit as in preceding claims, capable of movement about an axis (9) of rotation and rotatable thus between an operating position, in which the unit (1) is offered directly to the inspected product (3) and the scanning zone (6), and a non-operating position, distanced from the inspection drum (5) carrying the product (3), in which maintenance operations can be carried out on the unit.
